(19) Europäisches Patentamt
European Patent Office
Office européen des brevets

(11) Publication number: **0 422 896 B1**

(12) **EUROPEAN PATENT SPECIFICATION**

(45) Date of publication of patent specification: **24.08.94**

(51) Int. Cl.5: **C08G 18/42**, C08G 18/73, C08L 75/04, //C08G18/42, C08G18/73,(C08L75/04,27:06)

(21) Application number: **90311052.6**

(22) Date of filing: **09.10.90**

(54) **Internal-finishing skin material.**

(30) Priority: **11.10.89 JP 263093/89**

(43) Date of publication of application:
**17.04.91 Bulletin 91/16**

(45) Publication of the grant of the patent:
**24.08.94 Bulletin 94/34**

(84) Designated Contracting States:
**BE DE FR GB**

(56) References cited:
**EP-A- 0 194 452**
**BE-A- 645 069**
**FR-A- 2 259 135**

**CHEMICAL ABSTRACTS, vol. 108, no. 16, April 1988 Columbus, Ohio, USA Tomoki etal.: "Manufacture of heat-curable polyurethane elastomers with low hysteresisand high resilience" page 62; column 1; ref. no. 133186K**

(73) Proprietor: **NIPPON POLYURETHANE INDUSTRY CO. LTD.**
**2-8, Toranomon 1-chome**
**Minato-ku Tokyo (JP)**

Proprietor: **Tosoh Corporation**
**4560, Kaisei-cho**
**Shinnanyo-shi, Yamaguchi-ken (JP)**

(72) Inventor: **Yano, Noriyoshi**
**1-13, Zushi 7-chome**
**Zushi-shi**
**Kanagawa-ken (JP)**
Inventor: **Kijima, Tetsuo**
**1809, Hashiba 2-chome**
**Taito-ku**
**Tokyo (JP)**
Inventor: **Tsunoda, Shohei**
**23-9, Nishi Azabu 2-chome**
**Kinato-ku**
**Tokyo (JP)**
Inventor: **Tanaka, Toshihiko**
**11-5, Takamidai 2 ch.**
**Yokkaichi-shi**
**Mie-ken (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

(74) Representative: **West, Alan Harry et al**
**R.G.C. Jenkins & Co.**
**26 Caxton Street**
**London SW1H 0RJ (GB)**

## Description

The present invention relates to a material for the preparation of an internal-finishing skin of a composite resin, which comprises a polyurethane type resin (hereinafter referred to as "PU") having a specified chemical structure and a specified composition, and a polyvinyl chloride type resin (hereinafter referred to as "PVC"). More particularly, the present invention relates to a material for the preparation of an interior-finishing skin superior in flexibility, anti-fogging properties, adhesiveness to a cushioning material, non-surface tackiness, heat resistance, impact strength at low temperature, and having a satisfactory embossing property for surface decorative design.

In recent years, requirements for the performance of internal-finishing skins have become increasingly higher and more severe. The internal-finishing skin is required to be satisfactory in terms of both touch/feel and design/decorativeness in addition to its properties as an internal-finishing skin.

Particularly in automotive internal-finishing, performance requirements have become much more severe: requirements for flexibility to give a soft touch/feel, and simultaneously, with regard to durability, long-term retention of properties at high temperatures and impact resistance at low temperatures are required. Further, anti-fogging properties are important from the standpoint of safety.

On the other hand, the requirement for workability of the materials for the preparation of the internal-finishing skin is becoming more severe for higher production efficiency: embossing should be satisfactory in skin material molding, and any surface pattern should be retained without loss upon mold release even at a high temperature. Also, embossed surface patterns are becoming ever more complicated for ever more decorative designs, and finely designed and deeply embossed molds have to be employed, so that the above requirements for workability are becoming even more severe.

Under such circumstances, non-rigid plasticized PVC resins have mainly been used conventionally for automotive internal-finishing skins. Such non-rigid PVC contains a low molecular weight plasticizer, and has a disadvantage of impairing the driver's visual range owing to oil film formation (fogging) on the windshield or the like, caused by migration of the plasticizer. Additionally, such non-rigid PVC has the further disadvantages, caused also by migration of the plasticizer, of the disappearance of the embossing, hardening to become brittle, and the occurrence of cracking by low-temperature impact.

Increase of the softness to meet the requirement of a soft feel needs an increased amount of plasticizer, which results in the above disadvantages becoming even more serious, and also poor mechanical properties causing loss of emboss on hot molding.

Hitherto, in order to offset the above disadvantages, it has been proposed that polymer alloys produced by blending or copolymerizing PU and PVC are used for preparing non-rigid PVC.

For a material for the preparation of automotive internal-finishing skins, however, the conventional PU-PVC composite resins have not been brought into practical use because of the incompatibility of the flexibility required for a soft touch/feel and the mechanical properties of the product, and the moldability for embossing and mold release during processing of the material for internal-finishing skins, especially in large-sized molded articles such as the skin for an instrument panel.

JP-A-87-64861 describes a composite resin composition of PU and PVC, in which the PU is prepared by reaction of an organic polyisocyanate with a polyesterpolyol derived from 3-methyl-1,5-pentanediol alone or as 10 mole % or more of a mixed diol, with a dicarboxylic acid. The PU-PVC composite resin composition thus prepared is known to be satisfactory in terms of the compatibility of PU with PVC, and to exhibit sufficient plasticizing property, and to permit the preparation of soft articles with ease.

Practicably, however, if the content of 3-methyl-1,5-pentanediol in the mixed diol is 30 mol% or less, the PU derived from the mixed diol cannot exhibit satisfactory plasticizing properties. If the content exceeds 30 mol%, the PU-PVC composite resin composition shows tackiness and is liable to suffer disadvantages during processing such as loss of emboss in molding. Accordingly, in the mixed diol, a linear diol having relatively many methylene groups such as 1,9-nonanediol, is incorporated as one component. In this case, however, disadvantages arise that the plasticising effect is not sufficient and hot molding processing temperatures increase and reduce moldability. Accordingly, this PU-PVC composite resin composition, in use for internal-finishing sheets, has the disadvantage of being difficult to use in the preparation of embossed articles having fine decorative designs.

As described above, improvements in soft touch/feel or flexibility of a thermoplastic resin will impair tensile strength, heat distortion resistance and other properties, and will increase surface tackiness. It is therefore difficult to form known resins into a sheet having a sufficiently decorative skin design of a leather-like pattern without loss of the embossed pattern during heat molding without sticking to the mold.

Other prior art formulations include those of:

(i) FR-A-2259135 which is a non-crystalline elastomeric homogeneous blend of 100 parts by weight PVC and 110 to 160 parts by weight of a thermoplastic polyester-urethane obtained from a diisocyanate and a polyester diol of molecular weight at least 4000, preferably 6000 to 10,000, and obtained by reacting a $C_5$-$C_8$ saturated aliphatic dicarboxlic acid (preferably adipic, pimelic, suberic or methyl-adipic acid) with a polyol mixture of 70 to 90 mols 1,6-hexanediol and 10 to 30 mols $C_3$-$C_8$ diol having at least one methyl side chain, preferably neopentylglycol or trimethylpentane diol, and which is said to possess superior rubber-like elasticity; and

(ii) BE-A-645069 which are produced by mixing a homo- or copolymer of vinyl chloride, vinylidene chloride and/or vinyl acetate with a preformed polyurethane based on aliphatic or araliphatic polyisocyanates and polyesters of molecular weight 400 to 4000, which comprise 5 to 100 weight percent mixed polyester of dicarboxlic acid and at least two polyhydric alcohols each in an amount of at least 3 mol percent, preferably adipic acid, 1,6-hexanediol and 2,2-dimethyl-1,3-propane diol, the polyurethane preferably containing also as structural components conventional polyesters, polyester amides, polyethers, polyacitals or polythioethers.

The present invention seeks to provide a material for the preparation of an internal-finishing skin having a superior soft touch and excellent decorative design from a PU-PVC composite resin by improving the compatibility between, on the one hand, flexibility, and surface non-tackiness of the skin and, on the other hand, excellent embossing properties without suffering loss of emboss during hot molding such as extrusion, injection, compression, vacuum, blow or slush molding, without impairing anti-fogging properties, adhesiveness, heat-resistance and low temperature impact strength which are inherently superior properties of PU-PVC composite resins. Such compatibility of properties has not hitherto been achieved.

The present invention now provides a molding material for the preparation of an internal finishing skin, composed of a polyvinyl chloride and a polyurethane in a weight ratio of 30/100 to 100/30, the polyurethane being derived from a polyesterdiol and an aliphatic or alicyclic diisocyanate, in which the polyesterdiol

(a) contains groups of the formula

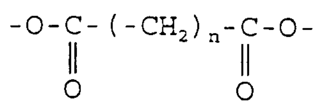

and groups of the formulae [I], [II] and [III] attached to those groups:

$-(CH_2)_m-$ [I]

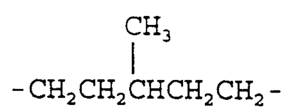

[II]

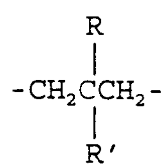

[III]

each of n and m being an integer from 4 to 9, each of R and R' being a $C_1$ to $C_4$ alkyl group, and the groups [I], [II] and [III] being present in amounts of 30 to 50 mol% [II], 10 to 25 mol% [III] and a balance to 100 mol% [I] based on the total of [I] , [II] and [III];

(b) includes terminal OH groups; and

(c) has a number average molecular weight from 1,000 to 10,000.

According to one preferred aspect of the invention, the aliphatic diisocyanate is hexamethylene diisocyanate.

According to another preferred aspect of the invention, each of R and R' is a methyl group or an ethyl group.

The polyesterdiol employed in the present invention comprises groups $-O-C(=O)-(CH_2)_n-C(=O)-O-$ and the three groups [I], [II], and [III] attached to the above groups. In the absence of the group [III] and only with groups [I] and [II], the desired object of the present invention is not achievable, and various

disadvantages of the material become significant. Therefore, the group [III] is really essential for exhibiting the characteristics of the respective groups and making compatible the otherwise inconsistent properties.

In the polyesterdiol, the group -O-C(=O)-$(CH_2)_n$-C(=O)-O- may be derived from, for example, adipic acid, pimelic acid, suberic acid, azelaic acid, or sebacic acid.

The group [I]: -$(CH_2)_m$- as may be derived from, for example, 1,4-butanediol, 1,5-pentanediol, 1,6-hexanediol, or 1,9-nonanediol.

The group [II]: -$CH_2CH_2CH(CH_3)CH_2CH_2$- may be derived from 3-methyl-1,5-pentanediol.

The group [III]: -$CH_2C(R)(R')CH_2$- may be derived from, for example,
neopentylglycol:

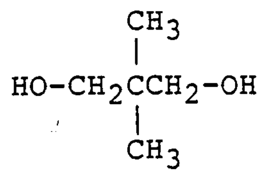

2,2-diethyl-1,3-propanediol:

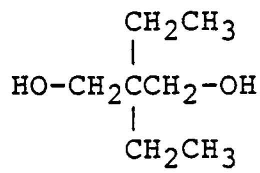

2-isobutyl-2-methyl-1,3-propanediol:

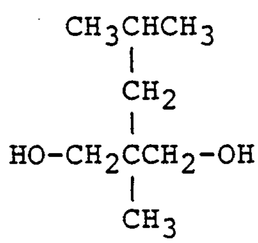

2-n-butyl-2-ethyl-1,3-propanediol:

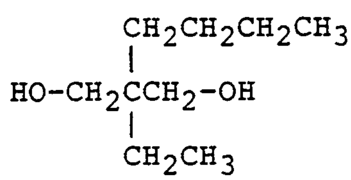

The polyesterdiol employed in the present invention is a dicarboxylic acid type polyester having terminal OH groups, derived from condensation polymerization of the above carboxylic acid with the polyols in the desired amounts.

On the basis of the total amount of the groups [I], [II], and [III], the group [II] is suitably present in a ratio of 30 to 50 mol%, the group [III] is suitably present in a ratio of 10 to 25 mol%, and the group [I] accounts for the remainder, namely 25 to 60 mol%.

With the ratio of group [I] below 25 mol%, loss of emboss occurs and surface tackiness is remarkable during processing, and additionally the impact strength of the final articles is extremely low.

With the ratio of group [I] above 60 mol%, the compatibility of the PU derived from the resulting polyesterdiol is low, which retards the plasticization of the composite resin and makes embossing poor in the molding process, not producing a high quality for the internal-finishing skin.

With the ratio of group [II] below 30 mol%, the plasticizing effect of the PU derived from the polyesterdiol towards the PVC is low, which retards the softening of the composite resin and requires high molding temperatures for embossing the composite resin for the internal-finishing skin.

With the ratio of group [II] above 50 mol%, the surface tackiness of the skin obtained from the composite resin is remarkable. This is not suitable for skin materials and retards the production of a skin complying with the design because of the occurrence of loss of emboss during processing, and lowering productivity even though mold release is feasible if the mold is cooled sufficiently at the mold release stage.

With the ratio of group [III] below 10 mol%, the surface tackiness of the skin obtained from the composite resin is not improved and embossing is poor in the molding step.

With the ratio of group [III] above 25 mol%, the flexibility of the composite resin is not readily exhibited, and in particular, the impact strength of the composite resin at low temperatures is extremely low.

The number-average molecular weight of the polyesterdiol used in the present invention should be within the range of from 1,000 to 10,000, preferably from 2,000 to 8,000 from the standpoint of the compatibility of the resulting PU with the PVC.

Aliphatic diisocyanates which may be employed in the present invention include hexamethylene diisocyanate, 2,4,4-trimethylhexamethylene diisocyanate, and 2,2,4-trimethylhexamethylene diisocyanate, and alicyclic diisocyanates include 4,4'-dicyclohexylmethane diisocyanate and isophorone diisocyanate. Diisocyanates generally employed in the PU formation include, in addition to the above aliphatic and alicyclic diisocyanates, aromatic diisocyanates such as 4,4'-diphenylmethane diisocyanate and tolylene diisocyanate. However, a PU which is derived from an aromatic diisocyanate does not give sufficient flexibility and involves disadvantages in weatherability.

The PVC resins applicable in the present invention are polymers containing vinyl chloride units including polyvinyl chloride homopolymers, and copolymers mainly constituted of vinyl chloride units such as vinyl chloride/vinyl acetate copolymers and vinyl chloride/ethylene/vinyl acetate copolymers, having a polymerization degree of not less than 600. The PVC may contain, if necessary, preliminarily a stabilizer, a lubricating agent and a coloring material.

Further, in the present invention, a polymer-blended polyvinyl chloride may also be used, which is prepared by preliminarily blending PVC with a PVC-compatible thermoplastic resins or rubbers other than the PU, such as acrylic resins, styrene resins, ABS resins and nitrile rubbers.

In the present invention, the ratio (by weight) of the PVC component to the PU component is in the range of 30/100 to 100/30.

A specific example of the PU-PVC composite resins according to the present invention is one in which the PU is derived by reaction of hexamethylene diisocyanate with a polyesterdiol having a number-average molecular weight of 2,000, the polyesterdiol being prepared from 1,6-hexanediol, 3-methyl-1,5-pentanediol, and neopentyl glycol (molar ration 40/40/20) with adipic acid.

The composite resin according to the present invention may be produced by one of the methods mentioned below:

(1) Polymer blending of PVC and a thermoplastic PU,

(2) Graft-polymerization of vinyl chloride on a thermoplastic PU: grafting by suspension polymerization of monomeric vinyl chloride with a PU soluble in vinyl chloride monomer as described in JP-A-83-40312, JP-A-83-42611, and JP-A-83-37019,

(3) Production of a PU-type composition in the presence of PVC powder as described in JP-A-83-5357,

(4) PU formation in PVC: impregnating the starting materials for PU successively into PVC while stirring, and forming PU in the PVC as described in JP-A-83-5357 and JP-A-86-250044,

(5) Production from mixed emulsion of a PVC emulsion and a PU emulsion,

(6) Reaction of a polyol-containing PVC with an isocyanate compound: reacting an isocyanate compound with a polyol-containing PVC prepared by the graft polymerization of vinyl chloride monomer on a polyol which is soluble in vinyl chloride monomer as shown in JP-A-86-120812, and JP-A-86-120820, and

(7) Blending by dissolution of PVC and PU in an organic solvent.

The material for the preparation of the internal-finishing skin according to the present invention is superior in heat resistance, impact resistance at low temperature, anti-fogging property and adhesiveness to a core material or a cushioning material. The material for the internal-finishing skin forms a surface for articles which is soft and not sticky, and satisfactory in embossing without losing emboss during extrusion molding, injection molding, compression molding, vacuum molding, blow molding or slush molding. Therefore, the present invention for the first time provides a material for the production of an internal-finishing skin satisfactory not only in performance (properties) but also in touch and the highly decorative design of the skin. In other words, the present invention is distinguished in terms of compatibility of the hitherto inconsistent properties i.e., flexibility, non-tackiness, and good embossing property. Accordingly, the

skin prepared from the composite resin according to the present invention may be employed favorably in a variety of internal-finishing applications. In particular, the excellent performance properties of the skin are exhibited in automotive interior-finishing.

The present invention is described more specifically referring to Examples. In the Examples, the "parts" are by weight.

Polyesterdiol example 1

2,360 g (20 mols) of 1,6-hexanediol, 2,360 g (20 mols) of 3-methyl-1,5-pentanediol, 1,060 g (10 mols) of neopentylglycol, and 6,512 g (44.6 mols) of adipic acid were placed in a 15-liter reactor equipped with a partial condenser. Further, thereto, 0.2 g of tetrabutyl titanate was added, and a dehydration reaction was allowed to proceed at 200 °C for 12 hours at atmospheric pressure, and the dehydration reaction was continued under reduced pressure for 12 hours at 200 °C, 10,680 g of a polyesterdiol being produced. The resulting polyesterdiol had an acid value of 0.2, a hydroxyl value of 55.9 and a number average molecular weight of 2,000.

The polyesterdiol thus prepared has a constitution (molar ratio of the groups) as shown in Table 1.

Table 1

| Group and Chemical structure | Mols (ratio) |
|---|---|
| $-OCCH_2CH_2CH_2CH_2CO-$<br>‖ ‖<br>O O | 44.6 |
| Group [I] | 20 |
| $-CH_2CH_2CH_2CH_2CH_2CH_2-$ | (40) |
| Group [II] | |
| $CH_3$<br>\|<br>$-CH_2CH_2CHCH_2CH_2-$ | 20<br>(40) |
| Group [III] | |
| $CH_3$<br>\|<br>$-CH_2CCH_2-$<br>\|<br>$CH_3$ | 10<br>(20) |

Polyesterdiol examples 2 - 5

Polyesterdiols were prepared in the same manner as in Polyesterdiol example 1 except that the diols and the dicarboxylic acid were changed to those shown in Table 2.

The starting materials, the molar ratios of the groups [I], [II], and [III], and the number-average molecular weights of the resulting polyesterdiols are summarized in Table 2.

Comparative polyesterdiol examples 1 - 4

Polyesterdiols were prepared in the same manner as in Polyesterdiol example 1 except that two groups of diols were respectively used out of the three groups of [I], [II], and [III], and the dicarboxylic acid was changed.

The starting materials, the molar ratios of the two groups out of the groups [I], [II], and [III], and the number-average molecular weights of the resulting polyesterdiols are summarized in Table 2.

Example 1

16 parts of hexamethylene diisocyanate and 200 parts of the polyesterdiol of Polyesterdiol example 1 were mixed and stirred at high speed. Thereafter, the mixture was extended in a vat and was kept at a temperature of 120 °C in a drier for 1 hour to complete the reaction to give a PU.

100 parts of the PU thus prepared were mixed with 100 parts of a powdery PVC having a degree of polymerization of 1,000 together with 0.5 part of calcium stearate, and 0.5 part of zinc stearate. The mixture was kneaded at 150 °C for 10 minutes, and formed into a sheet 0.8 mm thick.

The sheet thus prepared was overlayed on a nickel plate having a leather pattern engraved on its surface and having been sprayed with a fluorine type release agent, and they were pressed together at 180 °C at a pressure of 25 kg/cm$^2$ for 1 minute, and then cooled to 50 °C. The sheet was removed from the nickel plate to form a sheet having leather pattern on the surface.

Examples 2 - 5

Sheets having a leather pattern on the surface were prepared in the same manner as in Example 1 except that the amount of hexamethylene diisocyanate, and the polyesterdiols were as shown in Table 3.

Comparative examples 1 - 4

Sheets having a leather pattern on the surface were prepared in the same manner as in Example 1 except that the polyesterdiols were those prepared in the comparative polyesterdiol examples shown in Table 2.

[Method of Measurement]

Embossing property

The average roughness of 10 points (Rz) and the maximum roughness (Rt) were measured with a surface roughness tester (Surfcorder SE-30H, made by Kosaka Kenkyusho) according to JIS B0601, and JIS B0651. The depth of the emboss was evaluated by the values of Rz and Rt.

| Conditions for Measurement: | |
|---|---|
| Length of measurement:<br>Rate of delivery: | 10 mm<br>0.5 mm/s |

The results of the measurement were shown in Table 3.

Surface tackiness

The sheets prepared in Examples 1 - 5 and Comparative examples 1 - 4 were cut to a size of 5 cm x 5 cm. The embossed surfaces were defatted with acetone. The two sheets were superposed with the embossed surface inside, and were pressed evenly with a weight of 500 g in a thermostat kept at 45 °C for 24 hours. The releasability was evaluated. The results are shown in two evaluation grades in Table 3.

O Not adhered
X Not readily releasable

Hardness

Hardness was measured according to JIS K6301.

Tensile properties (tensile strength, and elongation)

These were measured according to JIS K6723.

Impact strength at low temperature

The brittle temperature was measured according to JIS K6723.

Table 2

| | | Polyesterdiol examples | | | | | Comparative Polyesterdiol examples | | | |
|---|---|---|---|---|---|---|---|---|---|---|
| | | 1 | 2 | 3 | 4 | 5 | 1 | 2 | 3 | 4 |
| Starting materials | Group [I] | | | | | | | | | |
| | 1,6-hexanediol | 40 | 40 | 50 | | 50 | 50 | | 50 | |
| | 1,9-nonanediol | | | | 25 | | | 50 | | |
| | Group [II] | | | | | | | | | |
| | 3-methyl-1,5-pentanediol | 40 | 40 | 35 | 50 | 40 | 50 | 50 | | 50 |
| | Group [III] | | | | | | | | | |
| | Neopentylglycol | 20 | 20 | 15 | 25 | | | | 50 | 50 |
| | 2,2-diethyl-1,3-propanediol | | | | | 10 | | | | |
| | Adipic acid | 89.2 | 96 | 90 | 90 | 45 | 89 | 88 | 89.5 | 89.5 |
| | Azelaic acid | | | | | 45 | | | | |
| Molar ratio of [I]/[II]/[III] | | 40/40/20 | 40/40/20 | 50/35/15 | 25/50/25 | 50/40/10 | 50/50/0 | 50/50/0 | 50/0/50 | 0/50/50 |
| Number-average molecular weight of product | | 2,000 | 5,000 | 2,200 | 2,300 | 2,400 | 2,000 | 2,000 | 2,000 | 3,000 |

Table 3

| | Examples | | | | | Comparative examples | | | |
|---|---|---|---|---|---|---|---|---|---|
| | 1 | 2 | 3 | 4 | 5 | 1 | 2 | 3 | 4 |
| Kind of polyesterdiol | polyesterdiol example | | | | | Comparative polyesterdiol example | | | |
| | 1 | 2 | 3 | 4 | 5 | 1 | 2 | 3 | 4 |
| Molar ratio of [I]/[II]/[III] | 40/ 40/20 | 40/ 40/20 | 50/ 35/15 | 25/ 50/25 | 50/ 40/10 | 50/ 50/0 | 50/ 50/0 | 50/ 0/50 | 0/ 50/50 |
| Amount of hexamethylene diisocyanate (parts) | 16 | 6.5 | 14.5 | 14 | 13 | 16 | 16 | 16 | 16 |
| Embossing property: | | | | | | | | | |
| (a) Average roughness of 10 points (Rz) (µm) | 123 | 121 | 122 | 129 | 125 | 109 | 106 | 101 | 110 |
| (b) Maximum roughness (Rt) (µm) | 175 | 171 | 172 | 177 | 175 | 151 | 147 | 139 | 159 |
| Surface stickiness | O | O | O | O | O | X | X | O | X |
| Hardness (JIS A) | 64 | 63 | 65 | 64 | 63 | 65 | 64 | 68 | 63 |
| Tensile properties: | | | | | | | | | |
| (a) Tensile strength ($kg/cm^2$) | 140 | 130 | 140 | 135 | 135 | 140 | 135 | 130 | 120 |
| (b) Elongation (%) | 420 | 470 | 430 | 450 | 430 | 430 | 420 | 480 | 460 |
| Impact strength at low temperature: Brittle temperature (°C) | < -60 | < -60 | < -60 | < -60 | < -60 | < -60 | < -60 | -46 | -38 |

## Claims

1. A moulding material composed of a polyvinyl chloride and a polyurethane in a weight ratio of 30/100 to 100/30, the polyurethane being derived from a polyesterdiol and an aliphatic or alicyclic diisocyanate, in which the polyesterdiol

(a) contains groups of the formula

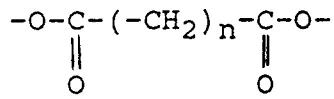

and groups of the formulae [I], [II] and [III] attached to those groups:

$-(CH_2)_m-$ [I]

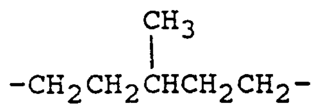

[II]

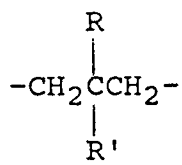

[III]

each of n and m being an integer from 4 to 9, each of R and R' being a $C_1$ to $C_4$ alkyl group, and the groups [I], [II] and [III] being present in amounts of 30 to 50 mol% [II], 10 to 25 mol% [III] and a balance to 100 mol% [I] based on the total of [I], [II] and [III];
(b) includes terminal OH groups; and
(c) has a number average molecular weight from 1,000 to 10,000.

**2.** A moulding material according to claim 1, wherein the aliphatic diisocyanate is hexamethylene diisocyanate.

**3.** A moulding material according to claim 1 or claim 2, wherein each of R and R' is methyl or ethyl.

**Patentansprüche**

**1.** Ein Formmaterial, das sich aus einem Polyvinylchlorid und einem Polyurethan in einem Gewichtsverhältnis von 30/100 bis 100/30 zusammensetzt, wobei das Polyurethan von einem Polyesterdiol und einem aliphatischen oder alicyklischen Diisocyanat abgeleitet ist, wobei der Polyesterdiol
(a) Gruppen der Formel

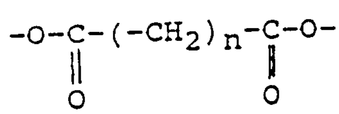

und Gruppen der Formen [I], [II] und [III], die mit diesen Gruppen verbunden sind:

$-(CH_2)_m-$ [I]

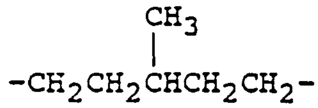

[II]

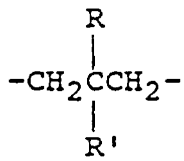

[III]

wobei n und m jeweils eine ganze Zahl von 4 bis 9 sind, R und R' jeweils eine $C_1$-$C_4$-Alkylgruppe darstellen und die Gruppen [I], [II] und [III] in Mengen von 30 bis 50 Mol% [II], 10 bis 25 Mol-% [III] und der Rest auf 100 Mol-% [I], bezogen auf die gesamte Menge von [I], [II] und [III], vorhanden sind, enthält;

(b) endständige OH-Gruppen beinhaltet; und

(c) ein zahlenmittleres Molekulargewicht von 1.000 bis 10.000 besitzt.

**2.** Ein Formmaterial nach Anspruch 1, wobei das aliphatische Diisocyanat Hexamethylendiisocyanat ist.

**3.** Ein Formmaterial nach Anspruch 1 oder 2, wobei R und R' jeweils Methyl oder Ethyl sind.

**Revendications**

**1.** Matière à mouler constituée d'un polymère de chlorure de vinyle et d'un polyuréthanne en un rapport pondéral de 30/100 à 100/30, le polyuréthanne étant dérivé d'un polyesterdiol et d'un diisocyanate aliphatique ou alicyclique, dans laquelle le polyesterdiol

(a) contient des groupes de formule

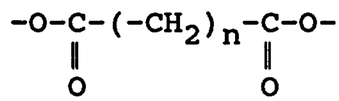

et des groupes de formule [I], [II] et [III] fixés à ces groupes

$-(CH_2)_m-$ [I]

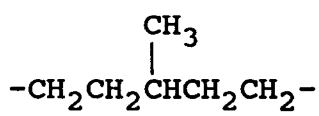

[II]

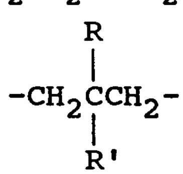

[III]

chacun des indices n et m étant un nombre entier de 4 à 9, chacun des groupes R et R' étant un groupe alkyle en $C_1$ à $C_4$, et les groupes [I], [II] et [III] étant présents en des quantités de 30 à 50 moles % de groupes [II], 10 à 25 moles % de groupes [III] et le pourcentage restant jusqu'à 100 moles % de groupes [I] sur la base du total des groupes [I], [II] et [III] ;

(b) comprend des groupes OH terminaux ; et

(c) possède une moyenne numérique du poids moléculaire de 1000 à 10 000.

**2.** Matière à mouler suivant la revendication 1, dans laquelle le diisocyanate aliphatique est l'hexaméthylène-diisocyanate.

**3.** Matière à mouler suivant la revendication 1 ou la revendication 2, dans laquelle chacun des groupes R et R' est un groupe méthyle ou éthyle.